# EUROPÄISCHE PATENTSCHRIFT

(11) **EP 1 035 048 B1**
(45) Veröffentlichungstag und Bekanntmachung des Hinweises auf die Patenterteilung: **26.05.2004**
(21) Anmeldenummer: 00101739.1
(22) Anmeldetag: 28.01.2000
(51) Int. Cl.: B65G 53/52

(54) **Vorrichtung zur Aufteilung eines Zustroms von Feststoffpartikeln in Teilströme**
Device for dividing a flow of particulate solids into partial flows
Dispositif pour diviser un flux de particules solides en flux partiels

(30) Priorität: 09.03.1999 CH 43699
(43) Veröffentlichungstag der Anmeldung: 13.09.2000
(73) Patentinhaber: Von Roll Umwelttechnik AG, 8005 Zürich (CH)
(72) Erfinder: Müller, Patrick, 8006 Zürich (CH); Vock, René, 8906 Bonstetten (CH)
(74) Vertreter: Patentanwälte Schaad, Balass, Menzl & Partner AG

(56) Entgegenhaltungen:
- EP-A- 0 169 135
- CH-A- 337 781
- US-A- 4 203 689
- PATENT ABSTRACTS OF JAPAN vol. 007, no. 001 (M-183), 6. Januar 1983 (1983-01-06) & JP 57 160826 A (SHIN NIPPON SEITETSU KK), 4. Oktober 1982 (1982-10-04)
- PATENT ABSTRACTS OF JAPAN vol. 009, no. 011 (M-351), 18. Januar 1985 (1985-01-18) & JP 59 158733 A (HITACHI ZOSEN KK), 8. September 1984 (1984-09-08)

## Beschreibung

Die Erfindung betrifft eine vorrichtung zur Durchführung eines Verfahrens zur Aufteilung eines Zustroms von Feststoffpartikeln in Teilströme.

Es ist bekannt, ein Zustrom von aus einem Wirbelschichtreaktor ausgetragenen, in einem Zyklon vom Rauchgasstrom getrennten, heissen Feststoffpartikeln in Teilströme aufzuteilen. Ein Teilstrom wird direkt in den Wirbelschichtreaktor rezirkuliert, ein anderer Teilstrom wird über einen Wärmeaustauscher (z.B. einen Fliessbettkühler) zurück in den Wirbelschichtreaktor geleitet. Im Wärmeaustauscher wird der derart umgeleitete Teilstrom wärmegewinnend abgekühlt. Das Mengenverhältnis dieser beiden Teilströme wird mit mechanischen Mitteln, z.B. Klappen oder Ventilen geregelt. Durch die Regelung der über den Wärmeaustauscher umgeleiteten Feststoffmenge kann die Temperatur im Wirbelschichtreaktor wirksam geregelt werden.

Diese mechanischen Mittel sind hohen Arbeitstemperaturen und einer hohen mechanischen Beanspruchung ausgesetzt.

In US-A 4 203 689 wird eine Verteilvorrichtung für ein Pulver beschrieben, die aus einer Fluidisierkammer, die ein von oben kommendes mittiges Zufuhrrohr für das Pulver besitzt, zusammengesetzt ist, und die in ihrer Seitenwand an der Höhe der Oberfläche des Pulvers im fluidisierten Zustand zwei Ausgangsöffnungen aufweist, durch die das Pulver die Kammer verlässt.

In EP 0 169 135 wird eine Vorrichtung mit zwei Kammern beschrieben, wobei eine Kammer eine Seitenwand und einen Boden mit einer Fluidisiereinrichtung aufweist. Die Feststoffpartikel werden darin fluidisert und unter Umlenken in Teilräume aufgeteilt.

Der vorliegende Erfindung liegt die Aufgabe zugrunde, eine Vorrichtung der eingangs genannten Art zum Durchführen des Verfahrens ohne aufwendige mechanische Mittel und mit einfacher Wartung zu schaffen.

Diese Aufgabe wird erfindungsgemäss durch eine Vorrichtung mit den Merkmalen des Anspruches 1 gelöst.

Bevorzugte Weiterausgestaltungen der erfindungsgemässen Vorrichtung bilden den Gegenstand der abhängigen Ansprüche.

Bei dem mit der erfindungsgemässen Vorrichtung durchgeführten Verfahren werden die mechanischen Umlenkmittel zur Aufteilung des Zustromes durch verfahrenstechnische Massnahmen ersetzt. Dadurch entfällt sowohl der konstruktive als auch materialmässige Aufwand als auch die aufwendigen Wartungsarbeiten für die mechanischen Umlenkmittel.

Das mit der erfindungsgemässen Vorrichtung durchgeführte Verfahren ist einfach und ermöglicht dennoch eine präzise Regelung der Mengenverhältnisse in einzelnen Teilströmen. Die erfindungsgemässe Vorrichtung zum Durchführen des Verfahrens ist herstellungs- und wartungstechnisch kostengünstig.

Die Erfindung wird im folgenden anhand der Zeichnung näher erläutert.

Es zeigen:
- Fig. 1: ein Ausführungsbeispiel einer Vorrichtung zur Aufteilung eines Zustroms von verteilten Feststoffpartikeln in Teilströme in vertikalem Teilschnitt;
- Fig. 2: einen Schnitt entlang der Linie II-II in Fig. 1;
- Fig. 3: einen Schnitt entlang der Linie III-III in Fig. 1;
- Fig. 4: ein Ausführungsbeispiel einer Einrichtung zum Einblasen eines gasförmigen Verdünnungsmittels in einen der Teilströme im Längsschnitt; und
- Fig. 5: einen Schnitt entlang der Linie V-V in Fig. 4.

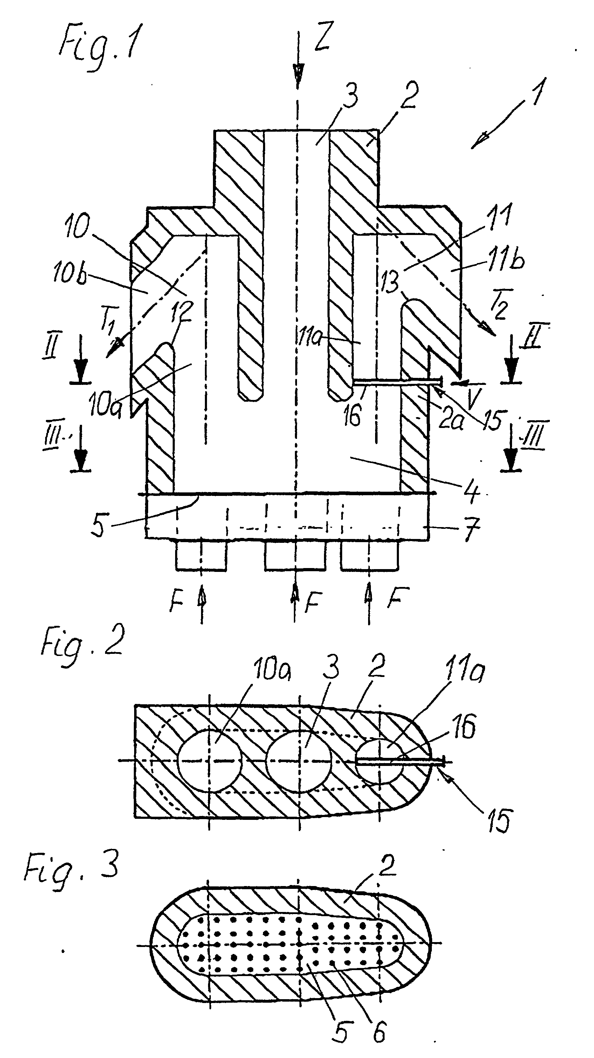

Fig. 1 zeigt eine Vorrichtung 1 zum Aufteilen eines mit einem Pfeil Z bezeichneten Zustroms von feinteiligen Feststoffpartikeln in zwei Teilströme, die mit Pfeilen T₁ und T₂ bezeichnet sind. Die Vorrichtung 1 weist ein Gehäuse 2 auf, das seitlich einen Umlenkraum 4 begrenzt, in den von oben ein vertikaler Zufuhrkanal 3 mündet. Der Umlenkraum 4 ist von unten durch einen Boden 5 abgeschlossen. Der Boden 5 trennt den Umlenkraum 4 von einer dreiteiligen Luftkammer 7 und ist mit einer Anzahl von regelmässig über die Bodenfläche verteilten Öffnungen 6 versehen (Fig. 3). Mit Pfeilen F ist in Fig. 1 die Zufuhr von einem gasförmigen Fluidisierungsmittel in die einzelnen Teile der Luftkammer 7 bezeichnet, die über die Öffnungen 6 mit dem Umlenkraum 4 verbunden sind.

Der Umlenkraum 4 ist mit einem ersten Wegführkanal 10 für den ersten Teilstrom T₁ sowie mit einem zweiten Wegführkanal 11 für den zweiten Teilstrom T₂ verbunden. Jeder Wegführkanal 10 bzw. 11 weist einen vertikalen, in den Umlenkraum 4 mündenden Teil 10a bzw. 11a auf, der oben in einen schräg nach unten gerichteten Teil 10b bzw. 11b umgelenkt wird. Am Übergang dieser beiden Teile 10a, 10b bzw. 11a, 11b des jeweiligen Wegführkanals 10 bzw. 11 ist jeweils eine Umlenkkante 12 bzw. 13 vorhanden, die als eine Überlaufkante funktioniert. Vorzugsweise liegt die Umlenkkante 13 des zweiten Wegführkanals 11 höher, d.h. in Strömungsrichtung weiter vorne als die Umlenkkante 12 des ersten Wegführkanals 10. Beim vorliegenden Ausführungsbeispiel ist der Durchmesser des zweiten Wegführkanals 11 kleiner als der Durchmesser des ersten Wegführkanals 10.

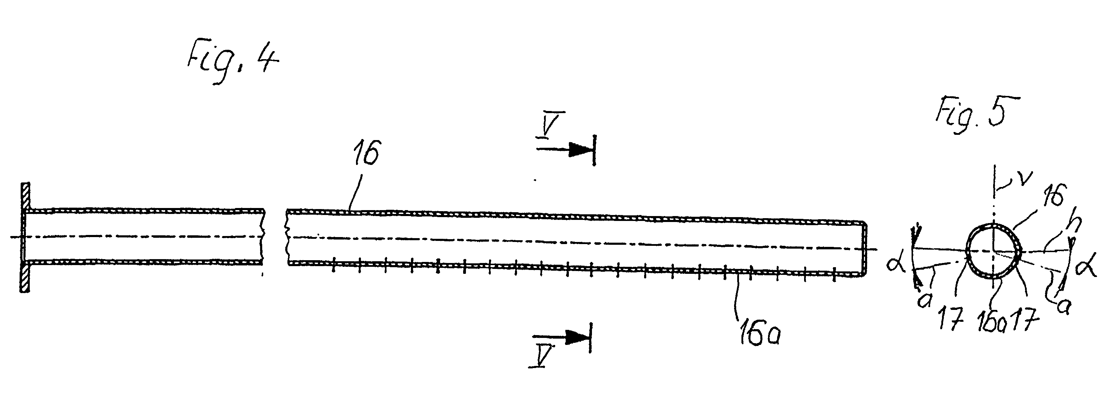

Der zweite Wegführkanal 11 ist mit einer Einrichtung 15 zum Einblasen eines gasförmigen Verdünnungsmittels in den zweiten Teilstrom T₂ ausgestattet. Es handelt sich um eine insbesondere aus Fig. 4 und 5 ersichtliche, rohrförmige Lanze 16, die in Gehäusewand 2a angeordnet ist und den vertikalen Teil 11a des zweiten Wegführkanals 11 horizontal hindurchragt. Die Lanze 16 ist nahe am Umlenkraum 4, in einem unteren Bereich des vertikalen Teils 11a des zweiten Wegführkanals 11 angeordnet. Die Lanze 16 ist über einen dem Durchmesser des zweiten Wegführkanals 11 entsprechenden Teil ihrer Länge mit einer Anzahl von radialen Öffnungen 17 (Fig. 5) versehen, die in der unteren Hälfte der Lanzenwand 16a angeordnet sind. In Fig. 4 ist die Verteilung der ansonsten aus dieser Figur nicht ersichtlichen Öffnungen 17 der Lanzenlänge entlang mit vertikalen Strichen angedeutet. Wie aus Fig. 5 ersichtlich bilden die Achsen a der radialen Öffnungen 17 einen Winkel α mit der horizontalen Achsenebene h der Lanze 16. Der Winkel α liegt vorzugsweise im Bereich von 0° bis 45°. Beim dargestellten Ausführungsbeispiel beträgt der Winkel α 15°. Dabei sind je zwei Öffnungen 17 symmetrisch zur vertikalen Achsenebene v der Lanze 16 angeordnet. Die Öffnungen 17 sind über den den zweiten Wegführkanal 11 durchquerenden Längenteil der Lanze 16 regelmässig verteilt.

Die Zufuhr von gasförmigem Verdünnungsmittel ist in Fig. 1 mit Pfeil V symbolisiert.

Der von oben durch den Zufuhrkanal 3 zugeführte Zustrom Z von Feststoffpartikeln wird im Umlenkungsraum 4 von unten fluidisiert. Die suspendierten Feststoffpartikel werden von unten nach oben in die beiden Wegführkanäle 10, 11 gedrängt. Der in die beiden Teilströme T₁, T₂ aufgeteilte Feststoff steigt unter Wirkung des gasförmigen Fluidisierungsmittels F durch die vertikalen Teile 10a, 11a der Wegführkanäle 10, 11 hinauf. Bei einer konstanten, über den Boden 5 gleichmässig verteilten Zufuhr von gasförmigem Fluidisierungsmittel würde beim gleichen Durchmesser der beiden Wegführkanäle 10, 11 gleich viel Feststoff mit der gleichen Geschwindigkeit mit den beiden Teilströmen T₁, T₂ transportiert. Bei dem in Fig. 1 dargestellten Durchmesserverhältnis der beiden Wegführkanäle 10, 11 wird durch das gasförmige Fluidisierungsmittel mehr Feststoff in den ersten Wegführkanal 10 gedrängt, als in den zweiten Wegführkanal 11. Nun kann aber erfindungsgemäss die Menge des durch den zweiten Wegführkanal 11 geförderten Feststoffes durch Erzeugung eines Dichtegradientes im zweiten Teilstrom T₂ - bewerkstelligt durch das Einblasen des gasförmigen verdünnungsmittels V - gesteigert werden. Wird das gasförmige Verdünnungsmittel V über die Einrichtung 15 (Lanze 16 beim dargestellten Ausführungsbeispiel) eingeblasen, so wird die Dichte (und somit auch das spezifische Gewicht) der Gas-Feststoff-Mischung im zweiten Teilstrom T₂ im Vergleich mit dem ersten Teilstrom T₁ verringert. Dies bedeutet, dass der zweite Teilstrom T₂ schneller durch den zweiten Wegführkanal 11 hindurchströmt, wodurch die mit dem zweiten Teilstrom T₂ geförderte Feststoffmenge vergrössert wird. Das Mengenverhältnis der beiden Teilströme T₁, T₂ kann mit der Erzeugung des gewünschten Dichtegradientes im zweiten Teilstrom T₂ d.h. mit der Zuführung einer gewünschten Menge des gasförmigen Verdünnungsmittels, wirksam geregelt werden. Dadurch, dass die radialen Öffnungen 17 einen Winkel α von 0°bis 45° mit der horizontalen Achsenebene h der Lanze 16 bilden und in der unteren Hälfte der Lanzenwand angeordnet sind, wird eine optimale Verteilung des gasförmigen Verdünnungsmittels gewährleistet, ohne dass eine Gefahr entsteht, dass durch die Öffnungen 17 feine Feststoffpartikel in die Lanze 16 gelangen und diese verstopfen.

Durch die Aufteilung der Luftkammer 7 in drei Zonen, in welche das gasförmige Fluidisierungsmittel separat eingeleitet wird, kann der Zustand im Umlenkraum 4 nach Bedarf beeinflusst werden.

Die in Fig. 1 bis 3 dargestellte Vorrichtung 1 ist so ausgelegt, dass es möglich ist, bei Bedarf den sämtlichen Feststoff nur mit dem ersten Teilstrom T₁ weiterzufördern. Dabei spielt die unterschiedlich hohe Anordnung der beiden Umlenkkanten 12, 13 eine Rolle. Wird die Lanze 16 unwirksam, d.h. es wird kein Verdünnungsmittel V in den zweiten Teilstrom T₂ eingeblasen, so vermag das gasförmige Fluidisierungsmittel F allein nicht, den Feststoff über die höher gelegene Umlenkkante 13 hinauszutragen und der gesamte Feststoff wird mit dem ersten Teilstrom T₁ weitergefördert.

Die erfindungsgemässe Vorrichtung kann beispielsweise beim Aufteilen eines Zustroms von aus einem Wirbelschichtreaktor ausgetragenen, in einem Zyklon vom Rauchgasstrom abgeschiedenen, heissen Feststoffpartikeln in zwei Teilströme eine Verwendung finden. Mit dem einen Teilstrom werden die Feststoffpartikel direkt in die Wirbelschicht zurückgeführt. Die mit dem anderen Teilstrom geförderte Feststoffpartikel werden über einen Wärmeausteauscher, vorzugsweise einen Fliessbettkühler, zurück in die Wirbelschicht geleitet. Eine derartige Rezirkulierung von aus einer Wirbelschicht ausgetragenen Feststoffpartikeln ist beispielsweise in US-PS 5,797,336 beschrieben. Durch die erfindungsgemässe Regelung des über den Fliessbettkühler umgeleiteten und in diesem wärmegewinnend abgekühlten Feststoffmengenstroms kann die Temperatur im Wirbelschichtreaktor wirksam geregelt bzw. Temperaturschwankungen im Wirbelschichtreaktor ausgeglichen werden. Bei dem aus der vorstehend genannten Druckschrift bekannten Verfahren wird als Wirbelschicht-Feststoff beispielsweise Kalkstein, Sand, und andere Materialien in Partikelform eingesetzt. Der Wirbelschicht-Feststoff kann auch Flugasche oder kondensierte Salze enthalten.

Statt einer einzigen Lanze könnten auch zwei oder mehrere Lanzen horizontal den Wegführkanal durchqueren. Es wäre auch eine Anordnung von Lanzen in beispielsweise zwei horizontalen Ebenen übereinander denkbar. Statt über Lanzen könnte das Einführen des gasförmigen Verdünnungsmittels über radial in den Wegführkanal mündende, regelmässig in Umfangsrichtung verteilte Öffnungen erfolgen.

Das mit der erfindungsgemässen Vorrichtung durchgeführte Verfahren ist einfach und ermöglicht dennoch eine präzise Regelung der Mengenverhältnisse in einzelnen Teilströmen. Die erfindungsgemässe Vorrichtung zum Durchführen des Verfahrens ist herstellungs- und wartungstechnisch kostengünstig.

## Patentansprüche

1. Vorrichtung zum Durchführen eines Verfahrens zur Aufteilung eines Zustroms (Z) von feinteiligen Feststoffpartikeln in Teilströme (T₁,T₂) mit einem vorbestimmten geregelten Mengenverhältnis der Feststoffpartikel, die eine von oben in einen Umlenkraum (4) mündenden Zufuhrkanal (3) für den Zustrom (Z) und Wegführkanäle (10, 11) für die Teilströme (T₁, T₂) aufweist, wobei der Umlenkraum (4) von unten durch einen mit Öffnungen (6) zum Einblasen von einem gasförmigen Fluidisierungsmittel (F) versehenen Boden (5) begrenzt ist, und **dadurch gekennzeichnet, daß**
- jeder Wegführkanal (10, 11) einen vertikalen Teil (10a, 11a) aufweist, der unten von oben in den Umlenkraum (4) mündet und oben in einen weiteren, nach unten gerichteten Teil (10b, 11b) umgelenkt Wird, wobei im Umlenkungsbereich des jeweiligen Wegführkanals (10, 11) eine Umlenkkante (12, 13) angeordnet ist, und
- mindestens eines der Wegführkanäle (10, 11) mit einer Einrichtung (15) zum Einblasen eines gasförmigen Verdünnungsmittels (V) ausgestattet ist.

2. Vorrichtung nach Anspruch 1, **dadurch gekennzeichnet, dass** die Einrichtung (15) zum Einblasen eines gasförmigen Verdünnungsmittel (V) durch mindestens eine den entsprechenden Wegführkanal (11) horizontal durchquerende, rohrförmige Lanze (16) gebildet ist, die über einen dem Durchmesser des Wegführkanals (11) entsprechenden Teil ihrer Länge mit einer Anzahl von radialen Öffnungen (17) versehen ist, die in der unteren Hälfte der Lanzenwand (16a) angeordnet sind.

3. Vorrichtung nach Anspruch 2, **dadurch gekennzeichnet, dass** die Achsen (a) der radialen Öffnungen (17) einen Winkel (α) mit der horizontalen Achsenebene (h) der Lanze (16) bilden.

4. Vorrichtung nach Anspruch 2 oder 3, **dadurch gekennzeichnet, dass** je zwei Öffnungen (17) symmetrisch zur vertikalen Achsenebene (v) der Lanze (16) angeordnet sind.

5. Vorrichtung nach Anspruch 2 oder 3, **dadurch gekennzeichnet, dass** der Winkel (α) kleiner ist als 45°.

6. Vorrichtung nach Anspruch 5, **dadurch gekennzeichnet, dass** die Umlenkkante (13) des mit der Einrichtung (15) zum Einblasen eines gasförmigen Verdünnungsmittels ausgestatteten Wegführkanals (11) in Strömungsrichtung weiter vorne liegt, als die Umlenkkante (12) des anderen Wegführkanals (10).

7. Vorrichtung nach einem der Ansprüche 1 bis 6, **dadurch gekennzeichnet, dass** der Durchmesser des mit der Einrichtung (15) zum Einblasen eines gasförmigen Verdünnungsmittels (V) ausgestatteten Wegführkanals (11) kleiner ist, als der Durchmesser des anderen Wegführkanals (10).

8. Vorrichtung nach einem der Ansprüche 1 bis 7, **dadurch gekennzeichnet, dass** sie zwei vertikal in den Umlenkraum (4) mündende Wegführkanäle (10, 11) aufweist.

## Claims

1. Apparatus for carrying out a method for dividing an incoming stream (Z) of fine solid particles in part-streams (T₁, T₂) with a specifically regulated quantity ratio of the solid particles, which has a supply duct (3), opening into a deflection space (4) from above, for the incoming stream (Z) and lead-away ducts (10, 11) for the part-streams (T₁, T₂), the deflection space (4) being delimited from below by a bottom (5) provided with orifices (6) for the injection of a gaseous fluidizing agent (F), **characterized in that** each lead-away duct (10, 11) has a vertical part (10a, 11a) which, from above, opens below into the deflection space (4) and is deflected above into a further part (10b, 11b) directed downward, a deflection edge (12, 13) being arranged in the deflection region of the respective lead-away duct (10, 11), and at least one of the lead-away ducts (10, 11) being equipped with a device (15) for injecting a gaseous diluting agent (V).

2. Apparatus according to Claim 1, **characterized in that** the device (15) for injecting a gaseous diluting agent (V) is formed by at least one tubular lance (16) which passes horizontally through the corresponding lead-away duct (11) and which is provided, over a part of its length corresponding to the diameter of the lead-away duct (11), with a number of radial orifices (17) which are arranged in the lower half of the lance wall (16a).

3. Apparatus according to Claim 2, **characterized in that** the axes (a) of the radial orifices (17) form an angle (α) with the horizontal axial plane (h) of the lance (16).

4. Apparatus according to Claim 2 or 3, **characterized in that** in each case two orifices (17) are arranged symmetrically to the vertical axial plane (v) of the lance (16).

5. Apparatus according to Claim 2 or 3, **characterized in that** the angle (α) is smaller than 45°.

6. Apparatus according to Claim 5, **characterized in that** the deflection edge (13) of the lead-away duct (11) equipped with the device (15) for injecting a gaseous diluting agent is located further forward in the direction of flow than the deflection edge (12) of the other lead-away duct (10).

7. Apparatus according to one of Claims 1 to 6, **characterized in that** the diameter of the lead-away duct (11) equipped with the device (15) of injecting a gaseous diluting agent (V) is smaller than the diameter of the other lead-away duct (10).

8. Apparatus according to one of Claims 1 to 7, which has two lead-away ducts (10, 11) opening vertically into the deflection space (4).

## Revendications

1. Dispositif pour mettre en oeuvre un procédé pour diviser un flux entrant (Z) de fines particules solides en flux partiels (T₁, T₂), avec un rapport quantitatif régulé prédéterminé des particules solides, qui présente un canal d'alimentation (3) débouchant par le haut dans un espace de déviation (4) pour le flux entrant (Z) et des canaux d'évacuation (10, 11) pour les flux partiels (T₁, T₂), l'espace de déviation (4) étant limité par le bas par un fond (5) pourvu d'orifices (6) pour insuffler un agent de fluidisation gazeux (F), et **caractérisé en ce que** chaque canal d'évacuation (10, 11) présente une partie verticale (10a, 11a), qui en bas débouche par le haut dans l'espace de déviation (4) et en haut est déviée en une autre partie (10b, 11b) orientée vers le bas, une arête de déviation (12, 13) étant disposée dans la zone de déviation de chaque canal d'évacuation (10, 11), et au moins l'un des canaux d'évacuation (10, 11) étant équipé d'un agencement (15) pour insuffler un diluant gazeux (V).

2. Dispositif selon la revendication 1, **caractérisé en ce que** l'agencement (15) pour insuffler un diluant gazeux (V) est formé par au moins une lance (16) tubulaire traversant horizontalement le canal d'évacuation (11) correspondant, qui sur une partie de sa longueur correspondant au diamètre du canal d'évacuation (11) est pourvue d'une pluralité d'orifices radiaux (17) qui sont disposés dans la moitié inférieure de la paroi de lance (16a).

3. Dispositif selon la revendication 2, **caractérisé en ce que** les axes (a) des orifices radiaux (17) forment un angle (α) avec le plan axial horizontal (h) de la lance (16).

4. Dispositif selon la revendication 2 ou 3, **caractérisé en ce qu'**à chaque fois deux orifices (17) sont disposés symétriquement par rapport au plan axial vertical (v) de la lance (16).

5. Dispositif selon la revendication 2 ou 3, **caractérisé en ce que** l'angle (α) est inférieur à 45°.

6. Dispositif selon la revendication 5, **caractérisé en ce que** l'arête de déviation (13) du canal d'évacuation (11) équipé de l'agencement (15) pour insuffler un diluant gazeux est située plus en avant dans le sens d'écoulement que l'arête de déviation (12) de l'autre canal d'évacuation (10).

7. Dispositif selon l'une des revendications 1 à 6, **caractérisé en ce que** le diamètre du canal d'évacuation (11) équipé de l'agencement (15) pour insuffler un diluant gazeux (V) est plus petit que le diamètre de l'autre canal d'évacuation (10).

8. Dispositif selon l'une des revendications 1 à 7, **caractérisé en ce qu'**il présente deux canaux d'évacuation (10, 11) débouchant verticalement dans l'espace de déviation (4).
